# EUROPEAN PATENT APPLICATION

(11) **EP 1 870 349 A2**
(43) Date of publication of application: **26.12.2007**
(21) Application number: 06725831.9
(22) Date of filing: 29.03.2006
(51) Int. Cl.: B65D 81/00, A47J 31/06

(54) **CAPSULE CONTAINING GROUND PRODUCTS FOR PRODUCING INFUSIONS**

(30) Priority: 29.03.2005 ES 200500723
(71) Applicant: Dual Coffee System S.L., 01015 Vitoria Alava (ES)
(72) Inventor: LAFUENTE URQUIZA, Ignacio, 01015 - VITORIA - Alava (ES)
(74) Representative: Carvajal y Urquijo, Isabel
(86) International application number: PCT/ES2006/000150
(87) International publication number: WO 2006/103308

(57) **Abstract**

The present invention relates to a ground product-containing capsule for obtaining infusions, comprising an outer container made up of a lower body (1) and cover (2) provided with retaining means and holes (10) and openings (7) for the passage of water and infusion, and an inner container (3) with a porous wall carrying the ground product. The lower body (1) internally has a recess or slot (5) where a disk (6) is housed, provided with a plurality of small non-through boreholes, blocked by a thin wall with reduced strength.

## Description

The present invention relates to a ground product-containing capsule for obtaining infusions, such as coffee infusions or infusions of another type, by means of providing hot water which passes through the capsule and ground product.

More specifically, the capsule of the invention is designed for its coupling in the head of a coffee maker providing hot water under pressure in an enclosure in which the capsule is located, such that all the water passes through the capsule and ground product.

The capsule of the invention is of the type formed by an outer container with a rigid or semi-rigid wall, to allow its handling without risks of damage, and by an inner container with a flexible and porous wall carrying the ground product. The outer container is made up of a lower body and an upper cover that can be coupled to one another and is provided with retaining means and holes or openings for the passage of water or infusion.

A capsule of the type set forth is described for example in Spanish patent application no. 200401106, relating to equipment for the preparation of coffee and infusions, using a capsule carrying the ground product, in which the lower body and cover define a housing sized to tightly house the inner container. The lower body has at the bottom a passage which closes by means of an impermeable disk which can be perforated, whereas the cover has at the bottom a plurality of small through boreholes.

This type of capsules can only be used in coffee makers in which the hot water under pressure is provided through a needle which can perforate the impermeable disk, the needle of which acts in an upward direction, the infusion leaving through the holes of the cover.

The object of the present invention is a capsule which can be used in coffee makers in which the hot water under pressure is provided in a downward direction and through a feed duct opening into the upper part of a housing intended to receive the capsule.

Another object of the invention is to achieve a greater effect of extraction of the ground product, due to the effect of the passage of hot water, by means of an arrangement which partially delays or makes the outlet of the infusion from the outer wall of the container difficult.

Another object of the invention is to provide the lower body and cover with coupling means ensuring the fixing and closure between both components, as well as the retention of the inner container in the correct position.

According to the present invention, the lower body of the outer container internally has at the bottom a recess or slot occupying practically the entire surface of said bottom in which a disk with the same contour is housed, which disk is provided with a plurality of small boreholes sealed by a wall that can be broken easily. The recess or slot has at the bottom a central opening with much smaller dimensions than the contour of the slot, as well as a series of inner protuberances or projections on which the disk is supported on the contour of the slot.

The upper cover in turn has at the bottom a plurality of small through boreholes between its inner and outer surfaces through which the hot water under pressure provided by the coffee maker equipment will penetrate until reaching the inner container and the ground product, until reaching the disk which acts as a barrier preventing the passage of fluid, making the pressure inside the capsule increase to a point at which it causes the sheet blocking the holes of the disk to break, the passage therethrough being then opened and the infusion passing between the projections of the bottom of the lower body until reaching the central outlet opening.

The disk is also useful as an infusion outlet delaying element, forcing the hot water to remain in contact for more time with the ground product and to reach a higher pressure, all of which will allow obtaining an infusion with better quality.

The disk can be formed based on a plastic suitable for foodstuffs at the temperatures that it must resist. The holes can be made through almost the entire thickness of the disk, with a thin imperforated sheet, which will act as a breakable membrane when the water inside the capsule reaches a certain pressure.

The lower body and upper cover of the outer container have edges that can be fitted together, which edges comprise respective outer cylindrical wall sections which can coupled tightly to one another, inside one another, these sections having at their opposite surfaces adjustment means formed by a rib and peripheral groove with equal sections and located at the same height in the opposite surfaces of the cylindrical walls which can be coupled.

The outer cylindrical section of the edges that can be fitted together is internally limited at its start by a planar section perpendicular to said outer cylindrical section, in the form of a circular crown on which the edge of the inner cylindrical section is supported. This inner cylindrical section can have a double wall, adopting an inverted grooved configuration, the free edge of the two walls being supported on the circular crown limiting the outer cylindrical section at the lower part, so as to receive and compress between said edges and crown a peripheral wing or flange which the wall of the inner container has.

In this manner, the coupling and retaining means between the inner body and cover are also useful as sealing means between both components and as a retaining means of the inner container in its correct position, preventing it from sliding inside the outer container, which could prevent the hot water under pressure provided by the coffee maker from suitably traversing the inner container and the ground product mass.

The features set forth will be better understood with the following description made in reference to the attached drawings which show a non-limiting embodiment of the invention.

In the drawings:
Figure 1 is an exploded perspective view of a capsule constituted according to the invention.
Figure 2 is a diametric section of the capsule of Figure 1 in the assembled position.
Figure 3 corresponds to detail A of Figure 2 on a larger scale.
Figure 4 is a partial section of the disk on a larger scale.

The capsule shown in the drawings comprises an outer container with a rigid or semi-rigid and impermeable wall formed by a lower body 1 and a cover 2, and an inner container 3 with a flexible and porous wall, with one or two layers, containing the ground product and having a peripheral wing or flange 4.

The lower body 1 of the outer container internally has at the bottom a slot 5, for example with a circular contour, in which a disk 6 with the same contour is housed.

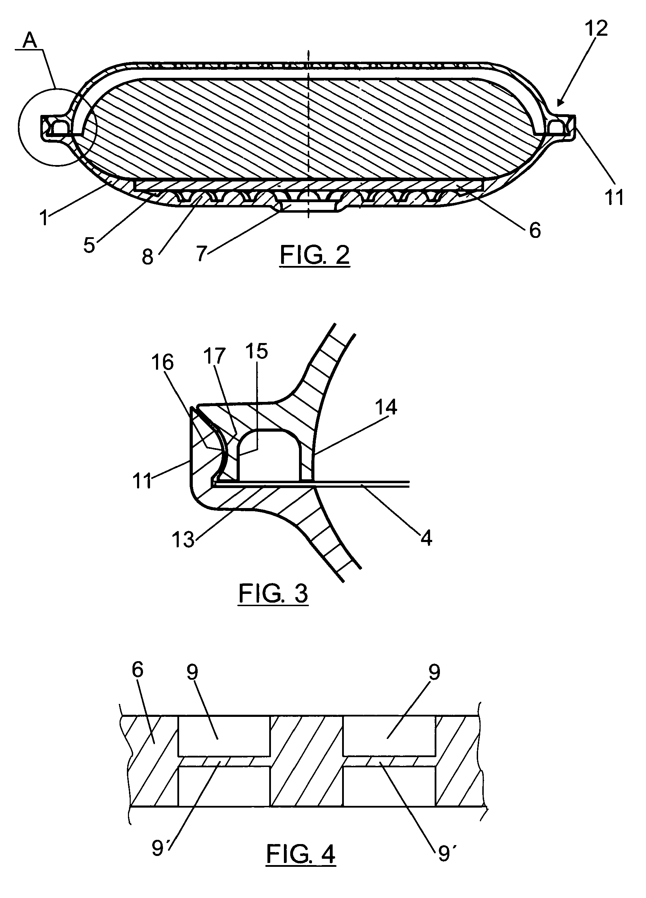

The slot 5 has in its central part an opening 7 for the outlet of the infusion, whereas after the inner surface it has a plurality of projections 8 on which the disk 6 is supported. This disk is further supported on the contour or periphery of the slot 5. The disk 6 is provided with a plurality of small non-through boreholes 9, blocked by a thin membrane 9', Figure 4, with little strength, and which can easily be broken due to the increase of pressure inside the capsule, as will be explained below.

The upper body 2 of the outer container has at the bottom a plurality of through boreholes 10 between its upper and lower surfaces.

As can best be seen in Figures 2 and 3, the lower body 1 and cover 2 have retaining means made up of edges that can be fitted together including respective outer 11 and inner 12 cylindrical wall sections that can be tightly coupled to one another, one inside the other. The outer section 11 is internally limited by a planar section 13 in the form of a circular crown, which is perpendicular to section 11. For its part, the inner section 12 has two walls 14 and 15, adopting a grooved configuration and the edge of the two walls 14 and 15 being supported on section 13 in the form of a circular crown.

The cylindrical wall or section 11 further has a peripheral rib 16 on its inner surface, whereas wall 15 has on the outer surface a peripheral groove 17 with an identical section, both further being located at the same height, such that when the cover 2 is coupled in the lower body 1 an insertion and fit is obtained between the rib 16 and the groove 17 which is useful as a retaining element.

On the other hand, a peripheral flange or wing 4 of the inner container 3 is located between the lower edge of the walls 14 and 15 of the inner section 12 and the planar surface 13 in the form of a circular crown.

With the discussed constitution, when the capsule is assembled the inner container 3 is in a stable position therein due to the fact that the peripheral wing or flange 4 is retained between sections 11 and 12 that can be coupled of the outer container. The peripheral flange or wing 4 is further pressed between the edge of walls 14 and 15 and the crown 13, Figure 3, acting as a leak-tight means so as to prevent the outlet of infusion between the walls of the lower body 1 and cover 2 of the outer container. On the other hand, due to the existence of the rib 16 of the outer wall 11 and groove 17 of the inner wall 15, safe retention between the lower body 1 and cover 2 is obtained in the position of maximum coupling of these two components.

During the phase of extracting the coffee, when the capsule of the invention is coupled in the corresponding housing of the coffee maker, the hot water under pressure provided by said coffee maker passes through the holes 10 and through the inner container 3 and ground product mass, until reaching the disk 6 acting as a barrier, preventing the passage of the fluid and causing the increase of pressure thereof up to a value at which the membrane 9' breaks and the infusion passes through the open holes 10, between the projections 8 and finally leaves through the opening 7, therefore the disk 6 acts as an outlet delaying element and as a means for increasing the pressure of the extractor fluid inside the capsule.

Based on the foregoing, good functioning of the capsule is obtained, assuring the outlet of the infusion through the opening 7 and with excellent infusion quality due to the effect of the delay and increase of pressure obtained by the disk 6.

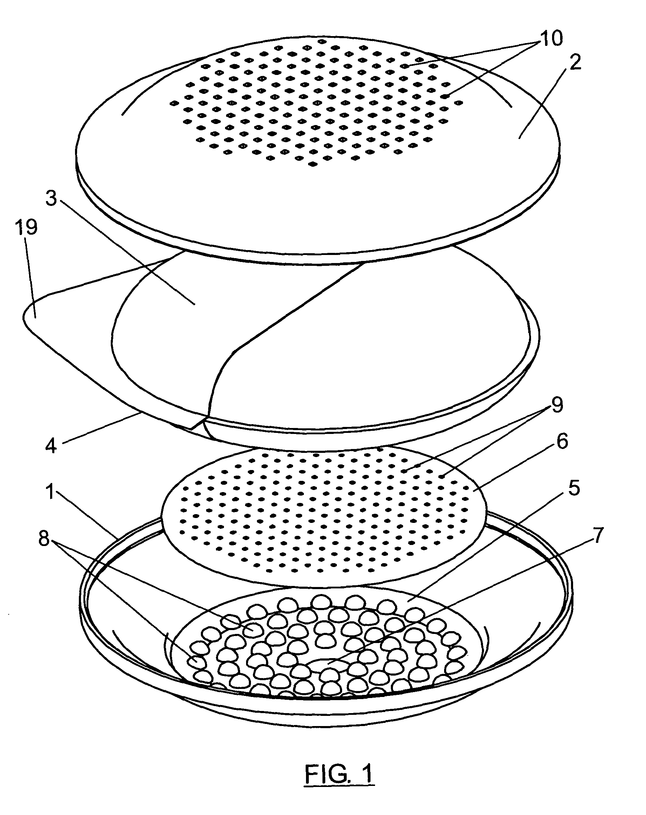

As can be seen in Figure 1, the peripheral wing or flange 4 of the inner container 3 can have a widening 19, like a tab, when the assembly is assembled, which will project outwardly between the sections of the panel 11 and 12 of the lower body 1 and cover 2, and once the infusion is obtained it can be used as a handle for the assembly, preventing burns.

## Claims

1. A ground product-containing capsule for preparing infusions, comprising an outer container with a rigid or semi-rigid and impermeable wall, made up of a lower body and an upper cover that can be coupled to one another, provided with retaining means and holes or openings for the passage of water and infusion, and an inner container with a flexible and porous wall carrying the ground product, **characterized in that** the lower body of the outer container internally has a recess or slot in which a disk with the same contour is housed, provided with a plurality of small non-through boreholes blocked by a thin wall with reduced strength, the recess or slot of which has at the bottom a central opening with dimensions that are much smaller than the contour of the slot, as well as a series of inner projections or protuberances, on the projections and contour of the slot of which the disk is supported; and **in that** the upper cover has at the bottom a plurality of small through boreholes between its inner and outer surfaces.

2. A capsule according to claim 1, **characterized in that** the disk is made of plastic compatible with food uses and the holes are made through almost the entire thickness of said disk, with a thin imperforated membrane that can break when the fluid inside the capsule reaches a certain pressure.

3. A capsule according to claim 1, **characterized in that** the retaining means between the lower body and cover of the outer container comprise edges that can be fitted together, made up of respective outer and inner cylindrical wall sections that can be tightly coupled to one another, one inside the other, arranging on opposing surfaces of said sections a peripheral rib on one and a peripheral groove on the opposite one, both having identical sections and being located in opposing positions when said sections are coupled to one another so as to be used as a retaining and sealing means.

4. A capsule according to claim 3, **characterized in that** the outer cylindrical section is internally limited at its start by a planar section perpendicular to said outer cylindrical section, in the form of a circular crown on which the edge of the inner cylindrical section is supported.

5. A capsule according to claims 3 and 4, **characterized in that** the inner cylindrical section has two walls and adopts a grooved configuration, the free edge of the two walls being supported on the circular crown internally limiting the outer cylindrical section.
